# FASCICULE DE BREVET EUROPEEN

(11) **EP 3 043 900 B1**
(45) Date de publication et mention de la délivrance du brevet: **01.12.2021**
(21) Numéro de dépôt: 14784270.2
(22) Date de dépôt: 10.09.2014
(51) Int. Cl.: B01J 8/06, B01J 8/00

(54) **DISPOSITIF MOBILE DE REMPLISSAGE DE REACTEURS CATALYTIQUES TUBULAIRES**
MOBILE VORRICHTUNG ZUM FÜLLEN ROHRFÖRMIGER KATALYTISCHER REAKTOREN
MOBILE DEVICE FOR FILLING TUBULAR CATALYTIC REACTORS

(30) Priorité: 10.09.2013 FR 1358704
(43) Date de publication de la demande: 20.07.2016
(73) Titulaire: SUEZ RV OSIS Industrial Cleaning, 59279 Loon-Plage (FR)
(72) Inventeur: SCHMIDT, Christian, F-67720 Hoerdt (FR)
(74) Mandataire: Kessler, Marc
(86) Numéro de dépôt international: PCT/FR2014/052237
(87) Numéro de publication internationale: WO 2015/036693

(56) Documents cités:
- DE-U1-202008 004 922
- FR-A1- 2 901 778
- US-A- 2 651 320
- US-A- 2 985 341
- US-A- 3 788 370
- US-A1- 2001 041 117
- US-A1- 2004 017 875
- None

## Description

### Domaine technique de l'invention

La présente invention a trait à un dispositif de remplissage de tubes d'un réacteur catalytique constitué d'une pluralité de tubes d'allure parallèle, ces tubes étant en finalité remplis d'un catalyseur se trouvant sous forme granulaire.

Les réacteurs catalytiques concernés par l'invention sont constitués de plusieurs milliers de tubes disposés verticalement, et qui présentent la particularité d'avoir une longueur importante par rapport à leur diamètre, typiquement d'un rapport qui peut être de l'ordre de 100 ou plus. Ce sont donc des tubes longs et fins.

Selon un exemple dimensionnel que l'on peut rencontrer en pratique, les tubes peuvent présenter un diamètre de l'ordre de 20 à 50 mm pour une longueur supérieure à 2 m. Ils sont donc remplis d'un matériau catalytique sous forme granulaire, parfois d'allure sphérique, parfois d'allure plutôt cylindrique ou de forme indistincte dont les dimensions sont en tout état de cause de l'ordre de 5 à 10 mm, ou même un peu plus pour les plus gros. Ces granules sont de constitution plus ou moins fragiles selon leurs formes et leurs compositions.

L'utilisation de tels réacteurs catalytiques est très répandue dans l'industrie chimique, où ils sont utilisés par exemple dans la synthèse de l'ammoniac, pour la fabrication d'acide nitrique, d'acide sulfurique, d'acide acrylique, de formol, ainsi que dans la pétrochimie.

Pour garantir le fonctionnement du réacteur, il est nécessaire de procéder à une vidange des billes ou granules selon une périodicité régulière. Il faut dans ce cas vider chaque tube du matériau granulaire usagé, pour aboutir in fine à un vidage de la totalité du réacteur, lors d'une opération dite de déchargement du catalyseur. Le réacteur fait ensuite l'objet d'une opération de remplissage avec des granules de matériau catalytique neuf, au cours d'une opération de chargement.

Le chargement des tubes, présente de nombreuses contraintes. La réalisation est d'abord fastidieuse car le nombre de tubes à charger est très important, impliquant des opérations répétitives du fait de ce grand nombre. Or, charger un tube n'est pas une sinécure, comme on le verra dans la suite. Enfin, malgré la difficulté inhérente à cette opération, le facteur temps est important.

Les opérations de déchargement et de chargement des catalyseurs nécessitent en effet des arrêts de maintenance de lignes de production, qui doivent être les plus brefs possibles pour d'évidentes raisons économiques.

Par ailleurs, compte tenu des natures chimiques et physiques des catalyseurs, souvent constitués de métaux lourds, il est impératif d'empêcher, ou à tout le moins de limiter autant que possible, la génération et la dispersion de poussières afin que les opérateurs n'y soient pas ou peu exposés.

Les dimensions des granules ou des billes de catalyseurs étant significatives par rapport auxdits diamètres, l'une des difficultés principales réside dans le fait que les granules peuvent se coincer et former des bouchons quelle que soit la solution de chargement choisie. La difficulté n'est pas moindre dans les cas où, pour optimiser le fonctionnement de réacteurs, plusieurs couches de nature différente de matériau granulaire peuvent être empilées dans chaque tube, avec des dimensions de granulés décroissantes de la couche supérieure à la couche inférieure.

En substance, charger des granules présentant les dimensions évoquées dans les tubes longs et fins en un temps raisonnable sans les dégrader et sans rejets intempestifs de poussières est incontestablement une opération difficile.

### Art antérieur

Une des solutions préférentiellement utilisées jusqu'ici consistait à mettre en place des machines de chargement de 5 ,10 ou 20 tubes. Ces machines, relativement volumineuses, présentent autant de compartiments que de tubes à remplir, soit 10 par exemple. Dans chaque compartiment, l'opérateur place une dosette de catalyseur prédéfinie, correspondant exactement à la quantité de catalyseur à verser dans un tube. Parallèlement, des entonnoirs reliés à chaque compartiment via un tuyau flexible sont enfichés dans les tubes du réacteur à remplir. Enfin, l'opérateur active le déchargement du catalyseur qui, grâce à un système vibratoire, chemine depuis le compartiment vers le tuyau, puis vers l'entonnoir, et enfin dans le tube du réacteur, et ce dans un temps donné.

La confection et la manipulation des dosettes, le cheminement du catalyseur à travers les tuyaux et les entonnoirs, et la répétition des opérations, rendent la qualité de cette méthode de chargement aléatoire.

Une machine de l'art antérieur tel que décrit nécessite une surface d'appui au sol s'étendant sur environ 400 tubes pour un remplissage de 10 tubes seulement. L'encombrement de ces machines est si important qu'il est difficile de remplir simultanément plus de 30 tubes d'un réacteur.

Une autre façon de charger le catalyseur dans les tubes selon l'art antérieur consiste à insérer des manchons de chargement dans les tubes à remplir. Ce type de manchon présente une longueur calculée en fonction de la hauteur de remplissage désirée d'un tube, un diamètre inférieur à celui d'un tube, et est doté d'une collerette supérieure (avec un trou de passage calibré) reposant sur une plaque tubulaire entourant le tube. Les opérateurs répandent le catalyseur directement au sol, de manière à remplir les manchons à ras bord à l'aide de balayettes. Les manchons sont ensuite retirés des tubes, puis réintroduits dans les tubes de manière à vérifier la hauteur de chargement de catalyseur dans les tubes. Ce dispositif présente l'inconvénient de provoquer beaucoup de poussière lors de la manipulation du catalyseur pendant le remplissage des manchons avec les balayettes. De plus, la vidange des manchons est fastidieuse, et seuls des granules en forme de billes peuvent être chargés avec cette méthode.

Le document US3788370 décrit un dispositif de remplissage de tubes d'un réacteur comprenant un réservoir de stockage temporaire de particulaires, des moyens de transport alimentant le réservoir de stockage temporaire en particules, un réservoir de débordement supporté par et verticalement sous le réservoir de stockage temporaire, un moyen de contrôle de débit de réservoir de stockage temporaire pour réguler la quantité de solides en particules sortant du réservoir de stockage temporaire et dans le réservoir de trop-plein, et au moins un tube de mesure orienté verticalement fixé au fond du réservoir de débordement et traversant celui-ci.

Le document US2985341 décrit un dispositif de remplissage de tubes d'un réacteur comprenant des moyens de libération des particules mettent en ouvre des raccords flexibles situés notamment en partie inférieure de tubes de mesure.

### Invention

L'invention, remédiant globalement aux inconvénients évoqués, propose une solution dont la mise en œuvre est aisée, accessible à tout type de réacteur, permettant un chargement rapide et efficace, et où la problématique de la poussière et la dégradation du catalyseur sont prises en charge.

A cet effet, le dispositif de l'invention consiste en un dispositif mobile de remplissage apte à remplir au moins un tube d'un réacteur catalytique constitué d'une pluralité de tubes d'allure parallèle remplis d'un catalyseur se trouvant sous forme granulaire. Ce dispositif comporte :
- un bac de stockage de catalyseur à fond en forme de tamis dont chaque trou est apte à concorder avec un tube du réacteur ;
- un système de dosage de catalyseur pour chaque tube à remplir, correspondant à une colonne de dosage apte à être centrée par rapport au tube et réceptionnant un volume prédéterminé de
catalyseur, chaque trou du fond du bac de stockage correspondant aux ouvertures des colonnes de dosage;
- des moyens de libération simultanée du catalyseur contenu dans le système de dosage vers le(s) tube(s) à remplir et
- des moyens de récupération de la poussière formée par le versement du catalyseur dans les tubes qui sont disposés entre le dit système de dosage et ladite pluralité de tubes du réacteur catalytique.

Le dispositif de l'invention est caractérisé, à titre principal, en ce qu'il présente des moyens de récupération de la poussière formée par le versement du catalyseur dans les tubes.

En effet, c'est au niveau de la jonction entre les colonnes de dosage et les tubes que se créé principalement la poussière. Ces moyens de récupération de la poussière seront décrits en détail dans la suite de la description.

Le dispositif de l'invention permet le remplissage d'un ou plusieurs tubes.

De préférence, le dispositif est prévu pour remplir par exemple 1, 3, 20 ou 100 tubes simultanément, de manière à couvrir le plus efficacement possible la surface circulaire ou un secteur de la surface circulaire d'un réacteur
catalytique. Le dispositif pour 100 tubes étant prévu pour remplir des zones centrales, et les dispositifs 1, 3 et 20 étant prévus pour remplir les pourtours du secteur.

Un tel dispositif pourrait également être facilement dimensionné pour remplir plus de 100 tubes simultanément.

Ce système de dosage permet d'éviter l'étape de prédosage usuellement effectuée lors de l'utilisation des machines de l'art antérieur. En effet, il n'est plus nécessaire de livrer des dosettes précises de catalyseur pour chaque tube. Il suffit de verser une quantité non mesurée de catalyseur directement dans le bac de stockage, et de le répartir dans les colonnes de dosage. Lorsqu'une colonne de dosage est remplie à ras bord, cela signifie que le volume nécessaire de catalyseur pour un tube est présent dans la colonne, et peut y être déversé. Il est possible de répéter l'opération n fois par exemple si l'équivalent de n colonnes de dosage doit être versé dans un tube. Cela permet de limiter l'encombrement en hauteur de la machine, afin qu'elle soit compatible avec tous les types de réacteurs.

Pour connaître le volume de catalyseur à verser dans un tube, il suffit de réaliser une simple conversion entre les hauteurs de remplissage du tube et de la colonne de dosage. En pratique, la hauteur de remplissage désirée d'un tube est connue, et son diamètre également. Il est donc aisé de connaître le volume de catalyseur désiré par tube. Connaissant ce volume et le diamètre d'une colonne de dosage, il est donc aisé de connaître la hauteur à remplir de la colonne de dosage, afin que le volume exact de catalyseur y soit présent. A cet effet, le dispositif mobile selon l'invention comprend des moyens de réglage en hauteur de la colonne de dosage en fonction du volume de catalyseur à doser. Après réglage de la hauteur de la colonne de dosage, l'objectif est toujours de la remplir à ras bord. L'opérateur peut ainsi vérifier d'un simple coup d'œil si les colonnes de dosage sont remplies ou non. Cet auto-contrôle peut être vérifié en un regard pour les 100 colonnes de dosage par exemple, ce qui représente un gain de temps considérable dans le process de remplissage. Par rapport à l'art antérieur, ce système de
dosage permet également d'éviter le risque d'oubli de dosette dans un compartiment étagé.

Selon une configuration possible, lesdits moyens de libération du catalyseur consistent en une guillotine positionnée sous le système de dosage et comportant un trou calibré pour chaque tube à remplir, ladite guillotine étant apte à coulisser entre une position fermée où le trou est décalé par rapport à la colonne de dosage et au tube correspondants, et une position ouverte où le trou est centré par rapport à la colonne de dosage et au tube correspondants. Cette guillotine permet donc, en fonction de sa position, de contenir ou de libérer le catalyseur présent dans la colonne de dosage. Il est possible de prévoir un jeu de guillotines avec un calibrage différent des trous en fonction du diamètre moyen des particules de catalyseur à charger. Pour le remplissage de n tubes, la guillotine consiste en une unique plaque positionnée sous le système de dosage et percée de n trous correspondant à l'agencement des n colonnes de dosage et des n tubes, n étant un nombre entier. Le déversement du catalyseur peut ainsi être effectué de manière simultanée dans les n tubes. Par exemple, selon la machine, 100 tubes peuvent être chargés simultanément au moyen d'un seul dispositif dont l'encombrement au sol est contenu dans l'espace au sol défini par les 100 tubes. Ce dispositif est donc compact, en plus d'être rapide et efficace.

Optionnellement, le coulissement de la guillotine est actionné par des moyens d'entrainement pneumatique du type vérin. Cependant, une telle guillotine peut tout à fait être actionnée manuellement.

De façon avantageuse, les moyens de récupération de la poussière consistent en :
- des orifices de récupération de poussière pratiqués dans la guillotine au niveau du pourtour de chaque trou calibré ;
- un compartiment d'aspiration de poussière localisé sous la guillotine et comprenant, pour chaque trou, un manchon intermédiaire placé entre la colonne de dosage et le tube et doté d'une fente
- d'évacuation de poussière, et un système de circulation d'air entre les manchons avec au moins une entrée d'air neuf et au moins une sortie d'air vicié aspiré par des moyens d'aspiration.

En effet, lorsque la guillotine est en position ouverte, le catalyseur stocké dans la colonne de dosage passe à travers le trou calibré de la guillotine puis par le manchon intermédiaire avant d'arriver dans le tube. Un goulot d'étranglement se situe au niveau du trou calibré de la guillotine, puisqu'il est chanfreiné et son diamètre est légèrement inférieur à celui de la colonne de dosage afin de restreindre le passage à un seul granule à la fois. Par conséquent, le pourtour du trou calibré constitue une zone de choc où ricoche le catalyseur, formant ainsi de la poussière qui s'évacue via lesdits orifices de récupération vers le compartiment d'aspiration. Cette poussière tombe tout autour des manchons intermédiaires, dans le compartiment d'aspiration, et est aspirée via des moyens d'aspiration du type tuyau d'aspirateur connecté à la sortie d'air. La fente de récupération de poussière dans le manchon intermédiaire est prévue pour faire évacuer la poussière présente au sein du manchon. La guillotine peut être revêtue d'un garnissage amortissant pour limiter au maximum une dégradation éventuelle du catalyseur. De manière générale, il est primordial d'aspirer cette poussière formée au niveau du dispositif mobile afin de préserver les opérateurs travaillant à proximité. En étant quasiment exempt de poussière, la qualité du chargement se trouve considérablement améliorée.

Par ailleurs, le dispositif mobile comporte des moyens de récupération de l'excédent de catalyseur dans le bac de stockage avant versement dans les tubes. Les moyens de récupération consistent en :
- une trappe prévue dans l'une des parois du bac de stockage, apte à s'ouvrir pour évacuer l'excédent de catalyseur ;
- un bec verseur positionné en sortie de la trappe ;
- un bac de récupération réceptionnant l'excédent de catalyseur via ledit bec verseur.

Le catalyseur ainsi récupéré peut être réutilisé lors du chargement suivant.

De façon pratique, le dispositif mobile est constitué d'un châssis supportant le bac de stockage, le système de dosage, les moyens de libération des doses et le compartiment à aspiration, ledit châssis étant posé sur silentbloc et secoué au moyen d'au moins un vibreur.

Le dispositif mobile coopère avec une plaque de centrage positionnée sur la zone où se trouvent les tubes à remplir, ladite plaque comportant :
- des douilles de centrage s'étendant perpendiculairement à la plaque et aptes à s'insérer dans l'ouverture supérieure des tubes correspondants ;
- au moins une butée de positionnement du dispositif mobile par rapport à la plaque en vue de centrer le système de dosage par rapport aux tubes.

Cette plaque est placée au préalable sur les tubes et permet donc de définir visuellement la zone à charger pour l'opérateur. Ce dernier déplace alors le dispositif mobile vers cette plaque, et sait qu'il est correctement positionné au-dessus d'elle lorsque le silentbloc vient en contact avec la butée de positionnement, limitant ainsi le déplacement du dispositif mobile. En conclusion, le dispositif mobile de remplissage ne comporte aucun élément invasif qui viendrait pénétrer dans un tube lors de son positionnement et de son chargement, de manière à garantir un encombrement minimum de la machine au sein du réacteur.

La présente invention concerne également un procédé de chargement de catalyseur dans un réacteur à plusieurs tubes comprenant les étapes suivantes :
- positionnement d'un dispositif mobile de remplissage, tel que décrit ci-dessus, sur une plaque de centrage disposée sur le réacteur avec centrage de chaque colonne de dosage du dispositif par rapport à un tube correspondant ;
- chargement du catalyseur dans un bac de stockage situé en partie
- supérieure du dispositif de remplissage et dont le fond comprend des trous débouchant dans les colonnes de dosage ;
- remplissage du catalyseur dans la (les) colonne(s) de dosage jusqu'à affleurer le fond du bac de stockage ;
- évacuation de l'excédent de catalyseur présent dans le bac de stockage vers un bac de récupération ;
- mise en œuvre de moyens de libération simultanée du catalyseur laissant passer la dose de catalyseur présente dans chaque colonne de dosage vers le tube correspondant ;
- récupération de la poussière formée par le versement du catalyseur (9) dans les tubes (1) par la mise en œuvre des moyens de récupération de la poussière dudit dispositif mobile de remplissage ;
- et fermeture des moyens de libération simultanée du catalyseur;
- répétition des étapes de chargement, remplissage, évacuation, mise en œuvre de moyens de libération simultanée du catalyseur, récupération de la poussière formée par le versement du catalyseur dans les tubes et fermeture des moyens de libération, en fonction du volume de remplissage exigé par tube.

Après ce chargement, des étapes classiques de contrôle, comme le jaugeage et le bouchonnage, sont réalisées.

Puisque seuls les tubes chargés doivent être jaugés, il est possible d'utiliser une multitude de piges en simultané, l'empreinte globale des piges correspondant à celle de la machine de remplissage utilisée.

### Description d'un exemple préférentiel illustré sur les figures

L'invention va à présent être décrite plus en détail, en référence aux figures annexées, pour lesquelles :
- la figure 1 est une vue en coupe du dispositif mobile selon l'invention ;
- la figure 2 est une vue du dispositif mobile qui détaille la jonction entre le système de dosage, le système d'aspiration et les tubes ;
- la figure 3 est une vue de dessus du dispositif mobile de remplissage ;
- la figure 4 est une vue de face du dispositif mobile de remplissage ;
- les figures 5 à 8 montrent les différentes étapes du positionnement du dispositif mobile de remplissage au-dessus des tubes du réacteur ;
- les figures 9 à 16 illustrent les différentes étapes d'un procédé de chargement de tubes du réacteur ;
- la figure 17 représente une autre variante d'un dispositif mobile de remplissage selon l'invention.

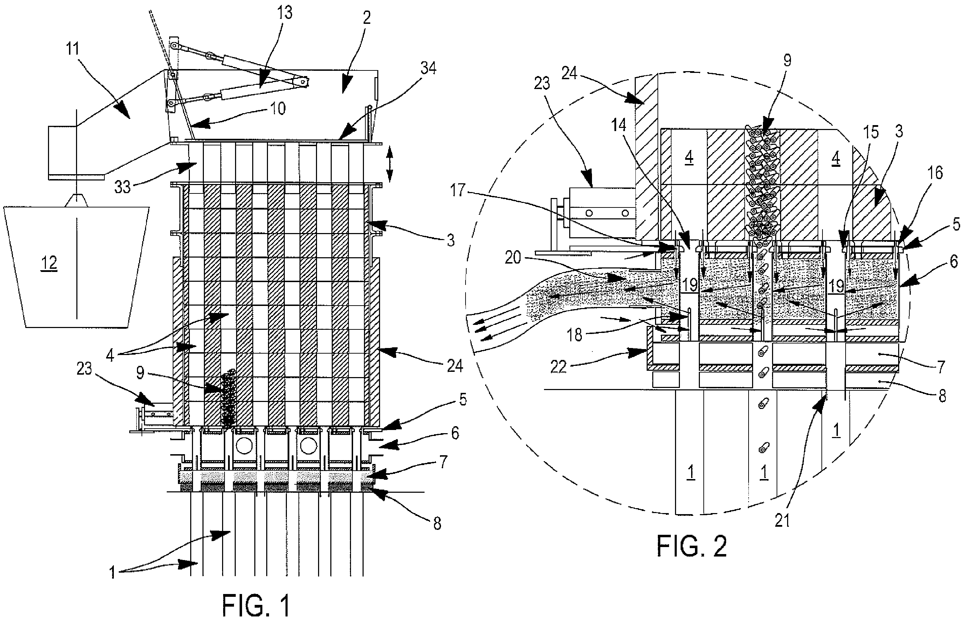

Selon la figure 1, le dispositif mobile de remplissage consiste en un châssis (24) d'allure parallélépipédique supportant différents éléments. Ces éléments consistent plus particulièrement en un bac de stockage (2) de catalyseur (9) positionné en partie supérieure du dispositif mobile et surmontant un système de dosage (3) constitué de colonnes de dosage (4) sous lesquelles se trouve une guillotine (5) permettant d'ouvrir ou de fermer le fond des colonnes de dosage (4) pour laisser passer ou non le catalyseur (9) à travers un compartiment d'aspiration (6), un silentbloc (7) et une plaque de centrage (8), avant d'arriver dans les tubes (1) du réacteur.

Le bac de stockage (2) dans lequel l'opérateur déverse le catalyseur (9) est doté d'un fond en forme de tamis (34) dont les orifices correspondent aux ouvertures des colonnes de dosage (4) du système de dosage (3). Une fois que les colonnes (4) sont remplies avec le catalyseur (9) à fleur du tamis (34), l'opérateur peut enlever l'excédent de catalyseur (9) présent dans le bac de stockage (2) en ouvrant une trappe (10) correspondant à une paroi latérale du bac de stockage (2) au moyen d'un système mécanique à biellettes (13) qui permet de soulever la trappe (10). L'opérateur peut ainsi pousser l'excédent de catalyseur hors du bac de stockage (2). Cet excédent de catalyseur (9) arrive dans un bec verseur (11) en forme d'entonnoir puis se déverse dans un seau (12) servant de bac de récupération de catalyseur (9). Une fois que les colonnes de dosage (4) sont bien remplies et que l'excédent de catalyseur (9) est évacué, l'opérateur peut refermer la trappe (10).

Suivant le volume de catalyseur (9) désiré au sein des colonnes de dosage (4) l'opérateur peut régler la hauteur des colonnes (4) grâce à un système coulissant où des manchons (33), débouchant en partie supérieure
au niveau du tamis et en partie inférieure dans les colonnes de dosage, peuvent être plus ou moins insérés dans les colonnes de dosage afin d'en modifier la hauteur de chargement comme illustré par la double flèche en figure 1. Une fois les colonnes de dosage (4) remplies, l'opérateur peut déverser le catalyseur (9) dans les tubes (1) du réacteur. Cette étape est illustrée plus précisément en figure 2.

Le système de dosage (3) peut consister de préférence en un bloc en néoprène ou dans une autre matière ayant des propriétés d'amortissement, au sein duquel sont pratiqués des percements correspondant aux colonnes de dosage (4). Il repose sur une plaque (16) inox fixée au châssis (24) et dotée de trous en correspondance avec les colonnes de dosage (4). Sous cette plaque (16) se trouve une guillotine (5) correspondant elle aussi à une plaque dotée de trous calibrés (14) positionnés de manière centrée avec les trous de la plaque (16) et les colonnes de dosage (4). Cette guillotine (5) présente la particularité d'être coulissable grâce à un vérin pneumatique (23) et est déplaçable entre une première position où la plaque ferme le fond des colonnes de dosage (4) et une position ouverte où les trous calibrés (14) ouvrent le fond des colonnes de dosage (4) pour libérer le catalyseur (9). La guillotine (5) est en position ouverte sur la figure 2.

De manière générale, l'accumulation et le déversement du catalyseur (9) des colonnes de dosage (4) vers les tubes (1) engendrent de la poussière de catalyseur qui a tendance à se volatiliser dans l'air ambiant environnant le dispositif mobile et à polluer les tubes (1). Or, cette poussière est néfaste pour les opérateurs travaillant à proximité et qui sont susceptibles de la respirer. Par conséquent, un compartiment d'aspiration (6) est prévu entre la guillotine (5) et les tubes (1). Ce compartiment d'aspiration (6) comporte des manchons intermédiaires (19) positionnés sous les colonnes de dosage (4) de manière à ce que le catalyseur (9) puisse se déverser via ces manchons (19) dans les tubes (1). Chaque manchon (19) est doté d'une fente (18) axiale à travers laquelle la poussière peut sortir et ainsi circuler autour des manchons (19). Un système de circulation d'air
(symbolisé par des flèches sur la figure 2) est prévu entre ces manchons (19) avec des entrées d'air et une sortie d'air (20) sur laquelle peut être enfiché un tuyau d'aspiration afin d'aspirer toutes les poussières accumulées autour des manchons (19).

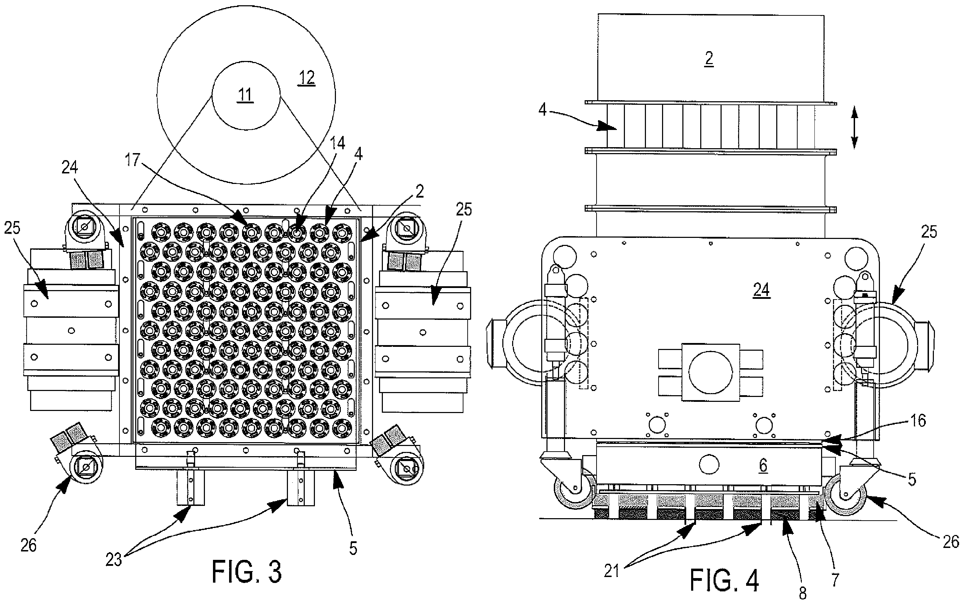

De plus, les trous de la plaque (16) et les trous calibrés (14) de la guillotine (5) ont un diamètre inférieur à celui des colonnes de dosage (4) ce qui signifie que le catalyseur (9) vient ricocher sur la plaque (16) et sur les bords chanfreinés (15) des trous calibrés (14) de la guillotine (5). Ces chocs engendrent eux aussi de la poussière de catalyseur, c'est pourquoi des orifices (17) de récupération de poussière sont prévus tout autour des trous calibrés (14) dans la guillotine (5) (voir figure 3), et il en est de même autour des trous dans la plaque (16). Ainsi, la poussière de catalyseur peut facilement passer à travers ces orifices de récupération de poussière (17) et arrive directement dans la zone du compartiment d'aspiration pour être aspirée. La guillotine (5) peut être revêtue d'un garnissage amortissant pour minimiser les chocs avec le catalyseur (9).

Afin de faciliter le déversement du catalyseur (9) dans les tubes (1), le dispositif mobile de remplissage est doté de deux vibreurs (25) situés sur deux faces opposés du châssis (24) comme illustré en figure 3. Ces vibreurs (25) permettent non seulement d'accélérer le processus de chargement mais également de séparer les amas de catalyseur (9) afin qu'ils passent plus facilement via les trous calibrés (14) et les manchons (19) avant d'arriver dans les tubes (1). Afin de limiter les déformations du châssis (24) lors de ces vibrations, il est prévu que le châssis (24) soit disposé sur un silentbloc (7) localisé sous le compartiment d'aspiration (6) comme cela est visible en figure 4. Enfin, pour que le dispositif mobile de remplissage soit facilement déplaçable, il est prévu quatre roulettes (26) disposées aux quatre coins du châssis. De cette manière, un opérateur peut à lui seul déplacer le dispositif mobile à sa convenance au-dessus des zones à remplir sur le réacteur.

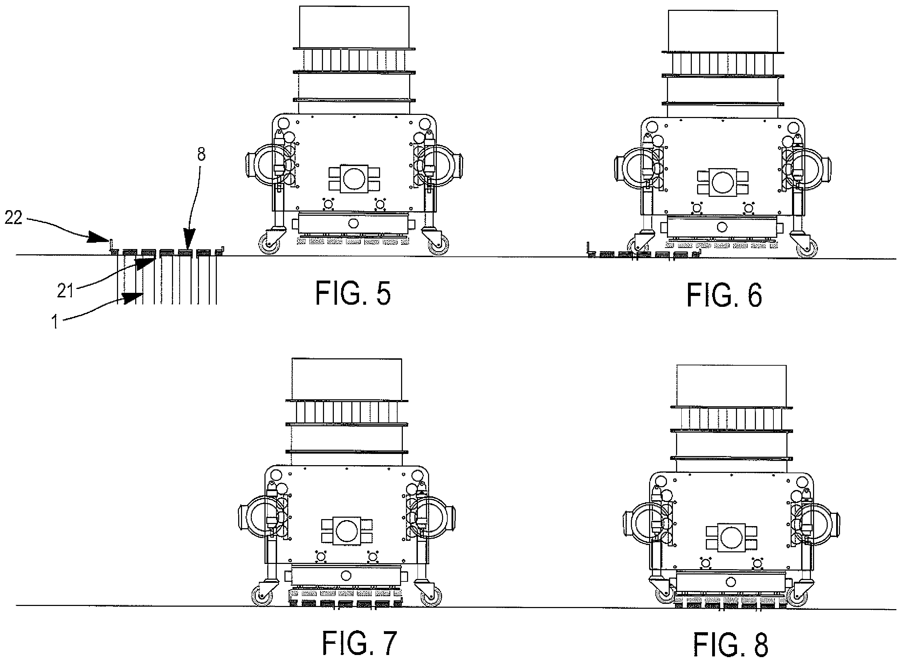

Comme cela est illustré sur les figures 5 à 8, un opérateur peut déplacer le dispositif mobile à l'aide des roulettes (26). Pour que les
colonnes de dosage (4) soient effectivement bien centrées sur les tubes (1), il est prévu une plaque de centrage (8) que l'opérateur vient poser au préalable sur la zone à remplir au niveau de la surface du réacteur. Concrètement, il s'agit d'une plaque (8) dotée de douilles de centrage (21) aptes à pénétrer en partie supérieure des tubes (1) afin d'être bien positionnée sur les tubes (1). Cette plaque (8) comporte des orifices au niveau de chaque tube (1) et comporte également une butée (22) de positionnement du dispositif mobile.

En figure 5, l'opérateur a correctement positionné la plaque (8) sur la zone du réacteur à remplir, le chariot mobile étant disposé à proximité.

Sur la figure 6, l'opérateur déplace le chariot et le fait rouler au-dessus de la plaque de centrage (8) jusqu'à ce que le silentbloc (7) vienne en butée contre la butée de positionnement (22) de la plaque (8) comme cela est illustré en figure 7. Le chariot est alors positionné au-dessus des tubes (1).

L'opérateur peut ensuite rabaisser le dispositif mobile pour qu'il vienne s'appuyer contre la plaque de centrage (8) et remonter les roulettes (26). En figure 8, le dispositif mobile est ainsi correctement positionné au-dessus des tubes et le processus de chargement peut démarrer.

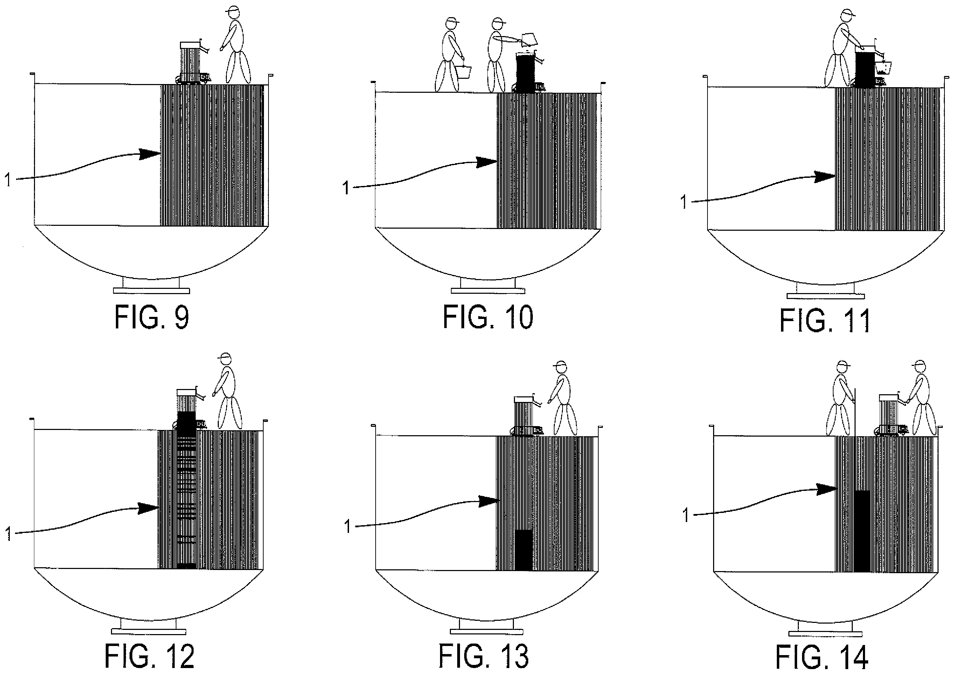

La première étape de ce processus est illustrée en figure 9 où le dispositif mobile de remplissage est correctement positionné au-dessus des tubes (1) d'un réacteur.

En figure 10, l'opérateur vient déverser du catalyseur dans le bac de stockage et le répartit dans les colonnes de dosage jusqu'à ce qu'elles soient bien remplies, la guillotine étant en position fermée.

En figure 11, l'opérateur évacue le surplus de catalyseur vers le bac de récupération afin que le catalyseur soit à fleur avec le fond du bac de stockage.

En figure 12, l'opérateur met en route les vibreurs du dispositif mobile et ouvre la guillotine afin de laisser passer le catalyseur dans les tubes du réacteur.

En figure 13, les tubes sont remplis avec une première hauteur de chargement. Selon la hauteur désirée, l'opérateur répète les opérations illustrées aux figures 10, 11 et 12 jusqu'à obtenir la hauteur désirée dans les tubes de chargement.

En figure 14, une fois la hauteur désirée obtenue, l'opérateur enlève le dispositif mobile et vient mesurer la hauteur de remplissage de chaque tube avec une pige afin de contrôler leur bon chargement.

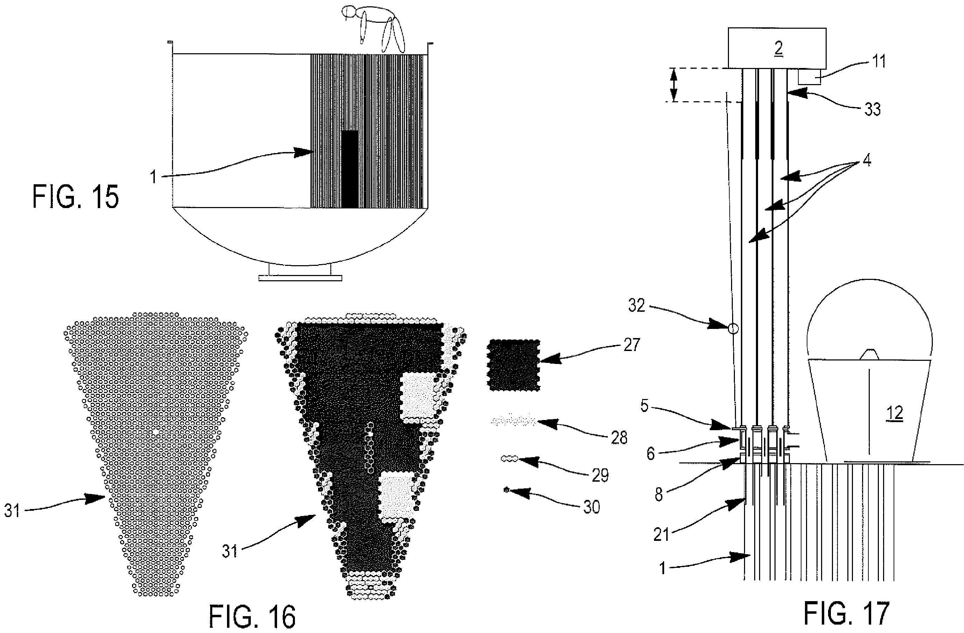

En figure 15, après avoir réalisé cette étape de contrôle, l'opérateur vient boucher les tubes remplis avec des plaques bouchons dont la dimension correspond à la zone chargée comme illustré en figure 16.

De par les dimensions des secteurs à charger dans un réacteur, à la manière d'un puzzle, certaines zones sont de préférence remplies à l'aide d'un dispositif mobile pour cent tubes, ou vingt tubes, ou trois tubes ou un unique tube, ces zones étant alors identifiées par des bouchons cent tubes (27), ou vingt tubes (28), ou trois tubes (29) ou unitaire (30).

Avec ce système de bouchonnage, l'opérateur identifie facilement les différentes zones du réacteur. Un code couleur peut être mis en place comme mesure de contrôle du chargement. Par exemple, avant le chargement, l'opérateur bouchonne toute la surface circulaire supérieure du réacteur avec des bouchons d'une première couleur à la manière d'un puzzle, leurs formes correspondant aux empreintes des différentes tailles des machines de chargement. Puis, pour chaque bouchon, l'opérateur la remplace par une plaque de centrage et procède au chargement des tubes situés en dessous. A la fin du chargement, il remplace la plaque de centrage par un bouchon d'une deuxième couleur, signifiant que les tubes sont chargés mais non vérifiés. Pour l'étape de jaugeage, l'opérateur enlève ce bouchon, vérifie la hauteur de chargement de catalyseur avec une ou plusieurs piges, rectifie le chargement si besoin, puis referme les tubes chargés et vérifiés avec un bouchon d'une troisième couleur. Ainsi, en fonction de la couleur des bouchons, l'opérateur sait si les tubes situés en dessous sont vides, ou chargés et non validés, ou chargés et validés.

La figure 17 illustre un dispositif mobile de remplissage pour trois tubes. Ce dispositif mobile reprend le même concept que le dispositif mobile précédemment décrit et comprend les mêmes éléments, à savoir un bac de stockage de catalyseur (2), des colonnes de dosage (4), un système de réglage en hauteur des colonnes de dosage via des manchons (33), une guillotine (5) positionnée sous les colonnes de dosage (4), un compartiment d'aspiration (6) avec ses manchons intermédiaires et une plaque de centrage (8) avec ses douilles de centrage (21) pénétrant dans les tubes (1). Ce dispositif étant prévu uniquement pour trois tubes, la guillotine peut par exemple être activée de façon manuelle via un mécanisme (32). De la même manière il est possible de prévoir des dispositifs mobiles pour un tout autre nombre de tubes par exemple 17, 40, 120 etc... selon les besoins des réacteurs.

Les configurations montrées aux figures citées ne sont que des exemples possibles, nullement limitatifs, de l'invention telle que définie dans les revendications.

## Revendications

1. Dispositif mobile de remplissage apte à remplir au moins un tube (1) d'un réacteur catalytique constitué d'une pluralité de tubes (1) d'allure parallèle remplis d'un catalyseur (9) se trouvant sous forme granulaire, ce dispositif comportant :
- un bac de stockage (2) de catalyseur (9) à fond en forme de tamis (34) dont chaque trou est apte à concorder avec un tube (1) du réacteur ;
- un système de dosage (3) de catalyseur (9) pour chaque tube (1) à remplir, correspondant à une colonne de dosage (4) apte à être centrée par rapport au tube (1) et réceptionnant un volume prédéterminé de catalyseur (9), chaque trou du fond du'bac de stockage (2) correspondant aux'ouvertures des colonnes de dosage (4);
- des moyens de libération simultanée du catalyseur (9) contenu dans le système de dosage (3) vers le(s) tube(s) (1) à remplir **caractérisé en ce qu'**il présente des moyens de récupération de la poussière formée par le versement du catalyseur (9) dans les tubes (1) qui sont disposés entre ledit système de dosage (3) et ladite pluralité des tubes (1) du réacteur catalytique.

2. Dispositif mobile de remplissage d'au moins un tube d'un réacteur catalytique selon la revendication précédente, **caractérisé en ce que** lesdits moyens de libération du catalyseur (9) consistent en une guillotine (5) positionnée sous le système de dosage (3) et comportant un trou calibré (14) pour chaque tube (1) à remplir, ladite guillotine (5) étant apte à coulisser entre une position fermée où le trou (14) est décalé par rapport à colonne de dosage (4) et au tube (1) correspondants, et une position ouverte où le trou (14) est centré par rapport à la colonne de dosage (4) et au tube (1) correspondants.

3. Dispositif mobile de remplissage d'au moins un tube d'un réacteur catalytique selon la revendication précédente, **caractérisé en ce que** lesdits moyens de récupération de la poussière consistent en :
- des orifices (17) de récupération de poussière pratiqués dans la guillotine (5) au niveau du pourtour de chaque trou calibré (14) ;
- un compartiment d'aspiration (6) de poussière localisé sous la guillotine (5) et comprenant, pour chaque trou (14), un manchon intermédiaire (19) placé entre la colonne de dosage (4) et le tube (1) et doté d'une fente (18) d'évacuation de poussière, et un système de circulation d'air entre les manchons (19) avec au moins une entrée d'air neuf et au moins une sortie d'air vicié (20) aspiré par des moyens d'aspiration.

4. Dispositif mobile de remplissage d'au moins un tube d'un réacteur catalytique selon l'une des revendications 2 à 3, **caractérisé en ce que**, pour le remplissage de n tubes (1), la guillotine (5) consiste en une unique plaque positionnée sous le système de dosage (3) et percée de n trous (14) correspondant à l'agencement des n colonnes de dosage (4) et des n tubes (1), n étant un nombre entier.

5. Dispositif mobile de remplissage d'au moins un tube d'un réacteur catalytique selon l'une des revendications 2 à 4, **caractérisé en ce que** le coulissement de la guillotine (5) est actionné par des moyens d'entrainement du type vérin (23).

6. Dispositif mobile de remplissage d'au moins un tube d'un réacteur catalytique selon l'une des revendications précédentes, **caractérisé en ce qu'**il comprend des moyens de réglage en hauteur de la colonne de dosage (4) en fonction du volume de catalyseur (9) à doser.

7. Dispositif mobile de remplissage d'au moins un tube d'un réacteur catalytique selon l'une des revendications précédentes, **caractérisé en ce qu'**il comporte des moyens de récupération de l'excédent de catalyseur (9) dans le bac de stockage (2) avant versement dans les tubes (1).

8. Dispositif mobile de remplissage d'au moins un tube d'un réacteur catalytique selon la revendication précédente, **caractérisé en ce que** lesdits moyens de récupération consistent :
- en une trappe (10) prévue dans l'une des parois du bac de stockage (2), apte à s'ouvrir pour évacuer l'excédent de catalyseur (9) ;
- un bec verseur (11) positionné en sortie de la trappe (10) ;
- un bac de récupération (12) réceptionnant l'excédent de catalyseur (9) via ledit bec verseur (11).

9. Dispositif mobile de remplissage d'au moins un tube d'un réacteur catalytique selon la revendication précédente, **caractérisé en ce qu'**il est constitué d'un châssis (24) supportant le bac de stockage (2), le système de dosage (3), les moyens de libération des doses et le compartiment à aspiration (6), ledit châssis (24) étant posé sur silentbloc (7) et secoué au moyen d'au moins un vibreur (25).

10. Système de remplissage d'au moins un tube d'un réacteur catalytique avec un dispositif mobile selon l'une des revendications précédentes, **caractérisé en ce que** le dispositif mobile coopère avec une plaque de centrage (8) positionnée sur la zone où se trouvent les tubes (1) à remplir, ladite plaque (8) comportant :
- des douilles de centrage (21) s'étendant perpendiculairement à la plaque (8) et aptes à s'insérer dans l'ouverture supérieure des tubes (1) correspondants ;
- au moins une butée de positionnement (22) du dispositif mobile par rapport à la plaque (8) en vue de centrer le système de dosage (3) par rapport aux tubes (1).

11. Utilisation du dispositif mobile de remplissage selon l'une quelconque des revendications précédentes pour le remplissage d'un réacteur catalytique comprenant une pluralité de tubes (1) parallèles avec un catalyseur (9) se trouvant sous forme granulaire.

12. Procédé de chargement de catalyseur dans un réacteur à plusieurs tubes (1) comprenant les étapes suivantes :
- positionnement du dispositif mobile de remplissage, selon l'une quelconque des revendications 1 à 9, sur une plaque de centrage (8) disposée sur le réacteur avec centrage de chaque colonne de dosage (4) du dispositif par rapport à un tube (1) correspondant ;
- chargement du catalyseur (9) dans un bac de stockage (2) situé en partie supérieure du dispositif de remplissage et dont le fond comprend des trous débouchant dans les colonnes de dosage (4) ;
- remplissage du catalyseur (9) dans la (les) colonne(s) de dosage (4) jusqu'à affleurer le fond du bac de stockage (2) ;
- évacuation de l'excédent de catalyseur (9) présent dans le bac de stockage (2) vers un bac de récupération (12) ;
- mise en œuvre de moyens de libération simultanée du catalyseur laissant passer la dose de catalyseur (9) présente dans chaque colonne de dosage (4) vers le tube (1) correspondant ;
- récupération de la poussière formée par le versement du catalyseur (9) dans les tubes (1) par la mise en œuvre des moyens de récupération de la poussière dudit dispositif mobile de remplissage;
- fermeture des moyens de libération simultanée du catalyseur;
- répétition des étapes de chargement, remplissage, évacuation, mise en œuvre de moyens de libération simultanée du catalyseur, récupération de la poussière formée par le versement du catalyseur (9) dans les tubes (1) et fermeture des moyens de libération en fonction du volume de remplissage exigé par tube (1).

13. Procédé de chargement selon la revendication 12 dans lequel la mise en œuvre des moyens de libération simultanée du catalyseur met en œuvre l'ouverture et la fermeture d'une guillotine (5).

## Patentansprüche

1. Mobile Vorrichtung zum Füllen, die ausgelegt ist, um mindestens ein Rohr (1) eines katalytischen Reaktors zu füllen, die aus einer Vielzahl von Rohren (1) besteht, die parallel ausgerichtet sind, gefüllt von einem Katalysator (9), der eine granulierte Form aufweist, wobei diese Vorrichtung Folgendes umfasst:
- einen Vorratsbehälter (2) von Katalysator (9) mit einem Boden in Form eines Siebs (34), von dem jedes Loch ausgelegt ist, um mit einem Rohr (1) des Reaktors übereinzustimmen;
- ein System zur Dosierung (3) von Katalysator (9) für jedes zu füllende Rohr (1), das einer Dosiersäule (4) entspricht, die ausgelegt ist, um mit Bezug auf das Rohr (1) zentriert zu sein, und ein vorbestimmtes Volumen von Katalysator (9) aufnimmt, wobei jedes Loch des Bodens des Vorratsbehälters (2) den Öffnungen der Dosiersäulen (4) entspricht;
- Mittel zur gleichzeitigen Freigabe des Katalysators (9), der im Dosiersystem (3) enthalten ist, in das/die zu füllenden Rohr(e) (1), **dadurch gekennzeichnet, dass** sie Mittel zur Wiedergewinnung des Staubs aufweisen, der durch die Einführung des Katalysators (9) in die Rohre (1) gebildet wird, die zwischen dem Dosiersystem (3) und der Vielzahl von Rohren (1) des katalytischen Reaktors angeordnet sind.

2. Mobile Vorrichtung zum Füllen mindestens eines Rohrs eines katalytischen Reaktors nach dem vorhergehenden Anspruch, **dadurch gekennzeichnet, dass** die Mittel zur Freisetzung des Katalysators (9) aus einer Guillotine (5) bestehen, die unter dem Dosiersystem (3) positioniert ist und ein kalibriertes Loch (14) für jedes zu füllende Rohr (1) umfasst, wobei die Guillotine (5) ausgelegt ist, um zwischen einer geschlossenen Position, in der das Loch (14) mit Bezug auf die entsprechende Dosiersäule (4) und das entsprechende Rohr (1) versetzt ist, und einer offenen Position, in der das Loch (14) mit Bezug auf die entsprechende Dosiersäule (4) und das entsprechende Rohr (1) zentriert ist, zu gleiten.

3. Mobile Vorrichtung zum Füllen mindestens eines Rohrs eines katalytischen Reaktors nach dem vorhergehenden Anspruch, **dadurch gekennzeichnet, dass** die Mittel zur Wiedergewinnung des Staubs aus Folgendem bestehen:
- Mündungen (17) zur Wiedergewinnung von Staub, die in der Guillotine (5) auf der Ebene des Umfangs jedes kalibrierten Lochs (14) ausgeführt sind;
- ein Fach zum Ansaugen (6) von Staub, das unter der Guillotine (5) lokalisiert ist, und umfassend, für jedes Loch (14), eine Zwischenmuffe (19), die zwischen der Dosiersäule (4) und dem Rohr (1) platziert und mit einem Schlitz (18) zum Abführen von Staub versehen ist, und ein System zum Umlauf von Luft zwischen den Muffen (19) mit mindestens einem Eingang von frischer Luft und mindestens einem Ausgang von verbrauchter Luft (20), die mit Hilfe der Ansaugmittel angesaugt wird.

4. Mobile Vorrichtung zum Füllen mindestens eines Rohrs eines katalytischen Reaktors nach einem der Ansprüche 2 bis 3, **dadurch gekennzeichnet, dass** für das Füllen von n Rohren (1) die Guillotine (5) aus einer einzigen Platte besteht, die unter dem Dosiersystem (3) positioniert und mit n Löchern (14) durchbrochen ist, die der Anordnung der n Dosiersäulen (4) und der n Rohre (1) entsprechen, wobei n eine ganze Zahl ist.

5. Mobile Vorrichtung zum Füllen mindestens eines Rohrs eines katalytischen Reaktors nach einem der Ansprüche 2 bis 4, **dadurch gekennzeichnet, dass** das Gleiten der Guillotine (5) von Antriebsmitteln vom Typ Zylinder (23) betätigt wird.

6. Mobile Vorrichtung zum Füllen mindestens eines Rohrs eines katalytischen Reaktors nach einem der vorhergehenden Ansprüche, **dadurch gekennzeichnet, dass** sie Mittel zum Einstellen der Höhe der Dosiersäule (4) je nach dem Volumen des zu dosierenden Katalysators (9) umfasst.

7. Mobile Vorrichtung zum Füllen mindestens eines Rohrs eines katalytischen Reaktors nach einem der vorhergehenden Ansprüche, **dadurch gekennzeichnet, dass** sie Mittel zum Wiedergewinnen des Überschusses an Katalysator (9) in den Vorratsbehälter (2) vor dem Einführen in die Rohre (1) umfasst.

8. Mobile Vorrichtung zum Füllen mindestens eines Rohrs eines katalytischen Reaktors nach dem vorhergehenden Anspruch, **dadurch gekennzeichnet, dass** die Mittel zum Wiedergewinnen aus Folgendem bestehen:
- einer Klappe (10), die in einer der Wände des Vorratsbehälters (2) vorgesehen ist, die ausgelegt ist, um den Überschuss an Katalysator (9) abzuführen;
- einen Ausgussschnabel (11), der am Ausgang der Klappe (10) positioniert ist;
- einen Wiedergewinnungsbehälter (12), der den Überschuss an Katalysator (9) über den Ausgussschnabel (11) aufnimmt.

9. Mobile Vorrichtung zum Füllen mindestens eines Rohrs eines katalytischen Reaktors nach dem vorhergehenden Anspruch, **dadurch gekennzeichnet, dass** sie aus einem Rahmen (24) besteht, der den Vorratsbehälter (2), das Dosiersystem (3), die Mittel zur Freisetzung der Dosen und das Fach zum Ansaugen (6) trägt, wobei der Rahmen (24) auf einen Silentblock (7) gestellt und mit Hilfe mindestens eines Vibrators (25) gesichert ist.

10. System zum Füllen mindestens eines Rohrs eines katalytischen Reaktors nach einem der vorhergehenden Ansprüche, **dadurch gekennzeichnet, dass** die mobile Vorrichtung mit einer Zentrierplatte (8) zusammenarbeitet, die auf der Zone positioniert ist, in der sich die zu füllenden Rohre (1) befinden, wobei die Platte (8) Folgendes umfasst:
- Zentrierhülsen (21), die sich senkrecht zur Platte (8) erstrecken und ausgelegt sind, um in die obere Öffnung der entsprechenden Rohre (1) eingeführt zu werden;
- mindestens einen Positionierungsanschlag (22) der mobilen Vorrichtung mit Bezug auf die Platte (8), um das Dosiersystem (3) mit Bezug auf die Rohre (1) zu zentrieren.

11. Verwendung der mobilen Vorrichtung zum Füllen nach einem der vorhergehenden Ansprüche zum Füllen eines katalytischen Reaktors, umfassend eine Vielzahl von Rohren (1) parallel zu einem Katalysator (9), der eine granulierte Form aufweist.

12. Verfahren zum Laden des Katalysators in einen Reaktor mit mehrern Rohren (1), umfassend die folgenden Schritte:
- Positionieren der mobilen Vorrichtung zum Füllen nach einem der Ansprüche 1 bis 9 auf einer Zentrierplatte (8), die auf dem Reaktor angeordnet ist, mit einer Zentrierung jeder Dosiersäule (4) der Vorrichtung mit Bezug auf ein entsprechendes Rohr (1),
- Laden des Katalysators (9) in einen Vorratsbehälter (2), der sich im oberen Teil der Vorrichtung zum Füllen befindet, und dessen Boden Löcher umfasst, die in die Dosiersäulen (4) münden,
- Füllen des Katalysators (9) in die Dosiersäule(n) (4), bis der Boden des Vorratsbehälters (2) zum Vorschein kommt,
- Abführen des Überschusses an Katalysator (9), der im Vorratsbehälter (2) vorhanden ist, in einen Wiedergewinnungsbehälter (12);
- Ausführen von Mitteln zur gleichzeitigen Freisetzung des Katalysators, die die Dosis an Katalysator (9), die in jeder Dosiersäule (4) vorhanden ist, hin zum entsprechenden Rohr (1) passieren lassen.
- Wiedergewinnen des Staubs, der durch die Einführung des Katalysators (9) in die Rohre (1) gebildet wird, durch die Ausführung der Mittel zur Wiedergewinnung des Staubs der mobilen Vorrichtung zum Füllen;
- Schließen der Mittel zur gleichzeitigen Freigabe des Katalysators;
- Wiederholen der Schritte des Ladens, Füllens, Abführens, Ausführens von Mitteln zur gleichzeitigen Freigabe des Katalysators, Wiedergewinnens des Staubs, der durch das Einführen des Katalysators (9) in die Rohre (1) gebildet wird, und Schließens der Mittel zur Freigabe je nach dem erforderlichen Füllvolumen pro Rohr (1).

13. Verfahren zum Laden nach Anspruch 12, wobei die Ausführung der Mittel zur gleichzeitigen Freigabe des Katalysators die Öffnung oder das Schließen einer Guillotine (5) ausführt.

## Claims

1. Mobile filling device able to fill at least one tube (1) of a catalytic reactor made up of a plurality of parallel tubes (1) filled with a catalyst (9) in granular form, this device comprising:
- a storage trough (2) of a catalyst (9) with a sieve-shaped bottom (34), each hole of which is able to coincide with a tube (1) of the reactor,
- a catalyst (9) dosing system (3) for each tube (1) to be filled, corresponding to a dosing column (4) able to be centered relative to the tube (1) and receiving a predetermined volume of catalyst (9), each hole of the bottom of the storage trough (2) corresponding to the openings of the dosing columns (4);
- means for simultaneously releasing the catalyst (9) contained in the dosing system (3) toward the tube(s) (1) to be filled, **characterized in that** it has means for recovering dust formed by pouring the catalyst (9) into the tubes (1) that are arranged between said dosing system (3) and said plurality of tubes (1) of the catalytic reactor.

2. Mobile device for filling at least one tube of a catalytic reactor according to the preceding claim, **characterized in that** said means for releasing the catalyst (9) consist of a guillotine (5) positioned below the dosing system (3) and including a calibrated hole (14) for each tube (1) to be filled, said guillotine (5) being able to slide between a closed position where the hole (14) is offset relative to the corresponding dosing column (4) and tube (1), and an open position where the hole (14) is centered relative to the corresponding dosing column (4) and tube (1).

3. Mobile device for filling at least one tube of a catalytic reactor according to the preceding claim, **characterized in that** said means for recovering dust consist of:
- orifices (17) for recovering dust formed in the guillotine (5) at the perimeter of each calibrated hole (14);
- a compartment (6) for dust suction located below the guillotine (5) and comprising, for each hole (14), an intermediate sleeve (19) placed between the dosing column (4) and the tube (1) and provided with a slot (18) for discharging dust, and an air circulation system between the sleeves (19) with at least one inlet for fresh air and at least one outlet (20) for stale air sucked by suction means.

4. Mobile device for filling at least one tube of a catalytic reactor according to one of claims 2 to 3, **characterized in that**, in order to fill n tubes (1), the guillotine (5) consists of a single plate positioned below the dosing system (3) and pierced with n holes (14) corresponding to the arrangement of the n dosing columns (4) and the n tubes (1), n being an integer.

5. Mobile device for filling at least one tube of a catalytic reactor according to one of claims 2 to 4, **characterized in that** the sliding of the guillotine (5) is actuated by driving means of the cylinder type (23).

6. Mobile device for filling at least one tube of a catalytic reactor according to one of the preceding claims, **characterized in that** it comprises means for adjusting the height of the dosing column (4) based on the volume of the catalyst (9) to be dosed.

7. Mobile device for filling at least one tube of a catalytic reactor according to one of the preceding claims, **characterized in that** it includes means for recovering the excess catalyst (9) in the storage trough (2) before pouring into the tubes (1).

8. Mobile device for filling at least one tube of a catalytic reactor according to the preceding claim, **characterized in that** said recovery means consist of:
- a hatch (10) provided in one of the walls of the storage trough (2), able to be opened to discharge the excess catalyst (9);
- a pouring spout (11) positioned at the outlet of the hatch (10);
- a recovery trough (12) receiving the excess catalyst (9) via said pouring spout (11).

9. Mobile device for filling at least one tube of a catalytic reactor according to the preceding claim, **characterized in that** it is made up of a chassis (24) supporting the storage trough (2), the dosing system (3), the means for releasing doses and the suction compartment (6), said chassis (24) being placed on silent blocks (7) and shaken using at least one vibrator (25).

10. System for filling at least one tube of a catalytic reactor with a mobile device according to one of the preceding claims, **characterized in that** the mobile device cooperates with a centering plate (8) positioned on the zone where the tubes (1) to be filled are located, said plate (8) including:
- centering bushings (21) extending perpendicular to the plate (8) and which are able to be inserted into the upper opening of the corresponding tubes (1);
- at least one positioning stop (22) of the mobile device relative to the plate (8) in order to center the dosing system (3) relative to the tubes (1).

11. Use of the mobile filling device according to any of the preceding claims to fill a catalytic reactor comprising a plurality of parallel tubes (1) with a catalyst (9) in granular form.

12. Process of loading a catalyst into a reactor with several tubes (1) comprising the following steps:
- positioning the mobile filling device, according to one of claims 1 to 9, on a centering plate (8) arranged on the reactor with centering of each dosing column (4) of the device relative to a corresponding tube (1);
- loading the catalyst (9) into a storage trough (2) located in the upper part of the filling device and the bottom of which comprises holes opening into the dosing columns (4);
- filling the dosing column(s) (4) with catalyst (9) until it is flush with the bottom of the storage trough (2);
- discharging the excess catalyst (9) present in the storage trough (2) toward a recovery trough (12);
- implementing means for simultaneous release of the catalyst allowing the dose of catalyst (9) present in each dosing column (4) to pass toward the corresponding tube (1);
- recovering the dust formed by pouring the catalyst (9) into the tubes (1) by implementing dust recovery means of said mobile filling device;
- closing the means for simultaneous release of the catalyst;
- repeating the steps of loading, filling, discharging, implementing means for simultaneously releasing the catalyst, recovering dust formed by pouring the catalyst (9) into the tubes (1) and closing the release means based on the filling volume required per tube (1).

13. Process of loading according to claim 12, wherein the implementation of the means for simultaneous release of the catalyst implements the opening and the closing of a guillotine (5).
